Europäisches Patentamt

European Patent Office

Office européen des brevets

(11) Numéro de publication: **0 240 427**
**A2**

(12) **DEMANDE DE BREVET EUROPEEN**

(21) Numéro de dépôt: **87400706.5**

(22) Date de dépôt: **31.03.87**

(51) Int. Cl.4: **C 02 F 1/06**
**B 01 D 3/06**

(30) Priorité: **01.04.86 TN 86046**

(43) Date de publication de la demande:
**07.10.87  Bulletin  87/41**

(84) Etats contractants désignés:
**BE CH DE FR GB IT LI**

(71) Demandeur: **Khalfi, Habib**
**El Ouardia 4, rue 10371, no. 11**
**Tunis (TN)**

(72) Inventeur: **Khalfi, Habib**
**El Ouardia 4, rue 10371, no. 11**
**Tunis (TN)**

(74) Mandataire: **Rinuy, Santarelli**
**14, avenue de la Grande Armée**
**F-75017 Paris (FR)**

(54) **Procédé et installation de distillation d'eau de mer.**

(57) Un nouveau système d'évaporation (cylindro-flash) permet la distillation de l'eau de mer avec une augmentation de la production de l'ordre de 75 % par rapport à la production d'unités de dessalement classiques.

Une telle installation se compose, notamment, d'un conden- seur - évaporateur (1), du cylindro-flash (CF), d'une chaudière (2), d'un couloir d'eau distillée (24), d'un circuit d'extraction de gaz (7), d'un circuit d'eau d'appoint (3), d'un circuit de traitement chimique de l'eau de mer (5) et d'un circuit de traitement chimique de l'eau distillée (6).

FIG.8

EP 0 240 427 A2

**Description**

"Procédé et installation de distillation d'eau de mer"

La présente invention concerne un procédé et une installation de distillation d'eau de mer.

On sait que les procédés classiques les plus appliqués à ce jour pour le dessalement de l'eau de mer sont principalement au nombre de quatre :
- la distillation par osmose inverse qui consiste à distiller l'eau de mer par des membranes sans employer d'énergie d'échauffement;
- la distillation selon le système multiflash (MSF) qui consiste à dessaler l'eau de mer par évaporation en utilisant de l'énergie thermique ou solaire ou électrique;
- la distillation selon le procédé dit de détente-éclair connu également sous le nom de flash, consistant en une évaporation par détente successive de cellules. Le rapport Δ entre la production en eau distillée et l'appoint en eau de mer est égal à 3,5;
- la distillation, enfin, selon le procédé connu sous le nom Longs Tubes Verticaux (LTV). C'est un système qui utilise une coulée de l'eau de haut en bas dans des tubes entourés par une vapeur circulant tout autour.

L'invention a pour objectif une amélioration sensible des performances de distillation, notamment du point de vue rendement en eau distillée pour une quantité donnée d'eau de mer et du point de vue énergétique.

L'invention propose un système de distillation de l'eau de mer dérivant de la combinaison du système MSF et d'un système cylindro-flash, dans lequel l'eau qui pénètre dans les cellules d'évaporation possède deux modes d'introduction qui peuvent être séparés ou conjugués.

Le premier consiste en une nappe flashante comme dans le cas du système multiflash ; le deuxième consiste en une méthode de multijet dirigé et flashant (pluralité de jets refoulés à haute température dans une enceinte sous vide.) Ces deux modes sont normalement exploités simultanément. Ceci a pour effet d'augmenter la capacité de production en eau distillée avec utilisation de la même quantité d'eau de mer à dessaler et la même quantité d'énergie calorifique d'échauffement utilisées par les unités classiques. Cette augmentation est de l'ordre de 3/4 de la production réelle actuelle.

L'invention propose ainsi un procédé de distillation d'eau de mer selon lequel on prélève de l'eau de mer, on chauffe cette eau de mer et on l'évapore dans une enceinte étanche dans laquelle on effectue une extraction continue de gaz, l'eau de mer circulant dans cette enceinte en vue de son évaporation par détente sous forme de nappes, d'une part, et sous forme de jets dirigés multiples, d'autre part, on condense la vapeur d'eau résultante et on recueille l'eau distillé ainsi produite.

L'invention propose également une installation de distillation d'eau de mer comportant :
- une enceinte étanche comprenant un étage de condensation avec des condenseurs et des passages d'eau de mer, et un étage d'évaporation,
- un circuit d'alimentation en eau de mer relié à l'entrée des passages d'eau de mer,
- un circuit de réchauffage avec une chaudière pour échauffer l'eau de mer sortant des passages d'eau de mer avant sa circulation dans l'étage d'évaporation,
- des voies parallèles de circulation de l'eau de mer dans l'étage d'évaporation sous forme de jets dirigés multiples, d'une part, et de nappes, d'autre part,
- un circuit d'extraction de gaz branché sur l'enceinte étanche pour permettre une évaporation par détente de l'eau de mer des jets et des nappes, et
- un circuit de prélèvement de l'eau distillée.

L'invention porte également sur un nouveau dispositif d'éjection d'eau de mer sous forme d'un multijet dirigé et flashant.

Des objets, caractéristiques et avantages de l'invention ressortent de la description qui suit, donnée à titre d'exemple non limitatif, en regard des dessins annexés sur lesquels :
- la figure 1 est une vue en coupe, selon la ligne I-I de la figure 8, d'un groupe cylindro-flash faisant partie d'une installation de dessalement conforme à l'invention;
- la figure 2 est un schéma de principe du circuit de circulation de saumure dans l'évaporateur et la chaudière d'une telle installation;
- la figure 3 est un schéma de principe du circuit d'eau distillée d'une telle installation;
- la figure 4 est un schéma de principe du circuit d'extraction de gaz d'une telle installation;

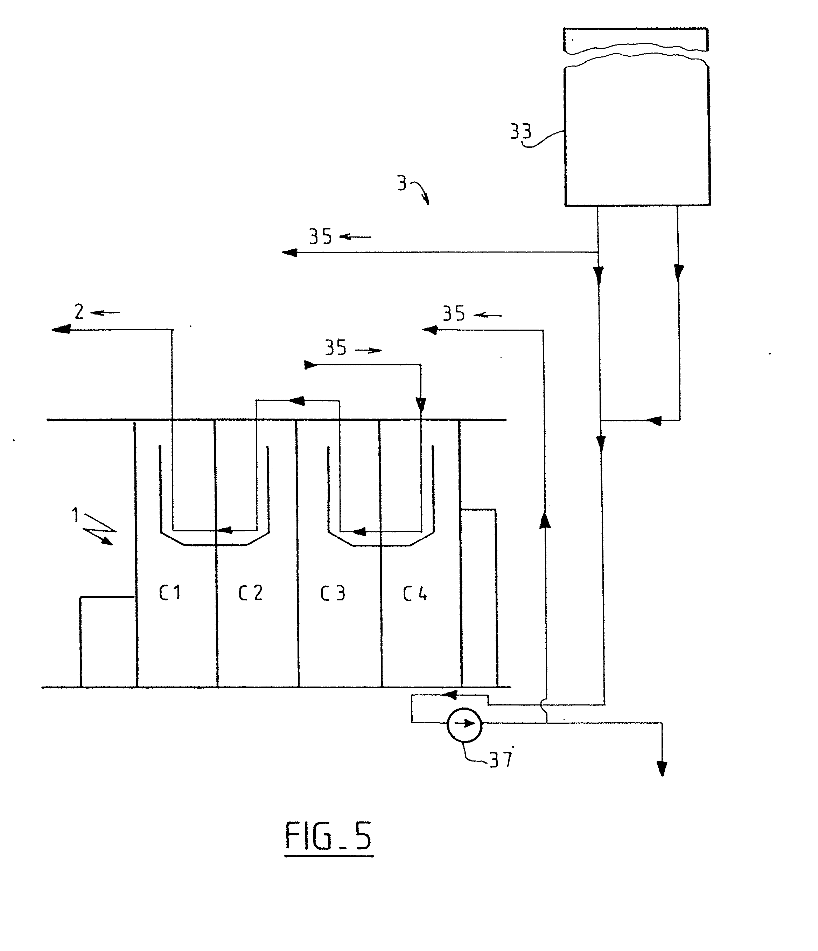

- la figure 5 est un schéma de principe du circuit d'alimentation en eau de mer d'une telle installation;
- la figure 6 est un schéma de principe du circuit de traitement chimique de l'eau de mer que peut comporter cette installation;

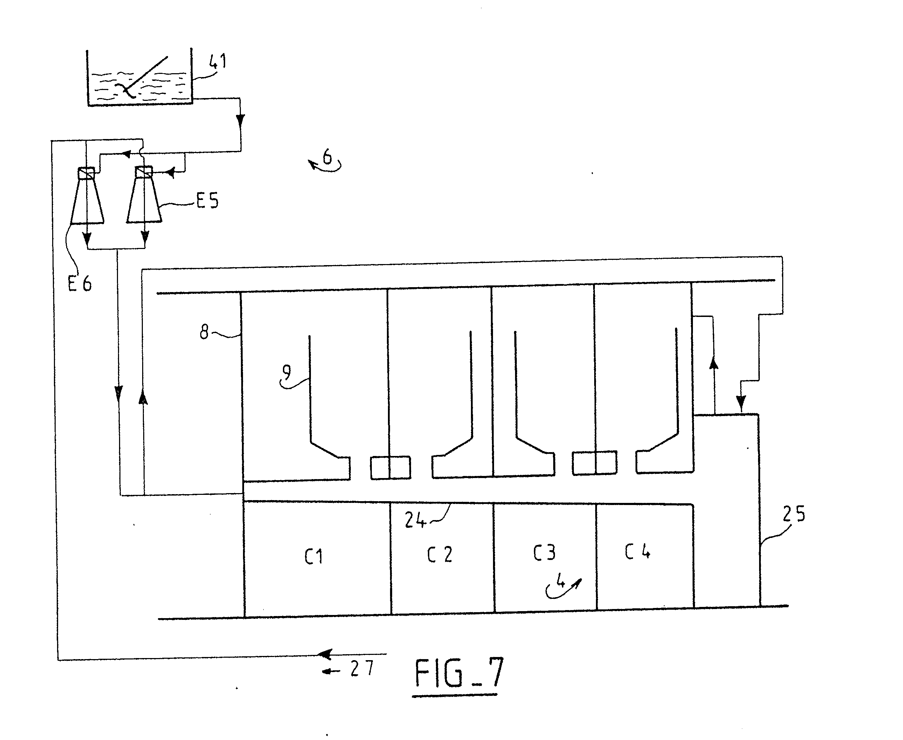

- la figure 7 est un schéma de principe du circuit de traitement chimique de l'eau distillée que peut comporter cette installation; et
- la figure 8 est un schéma d'ensemble d'une telle installation.

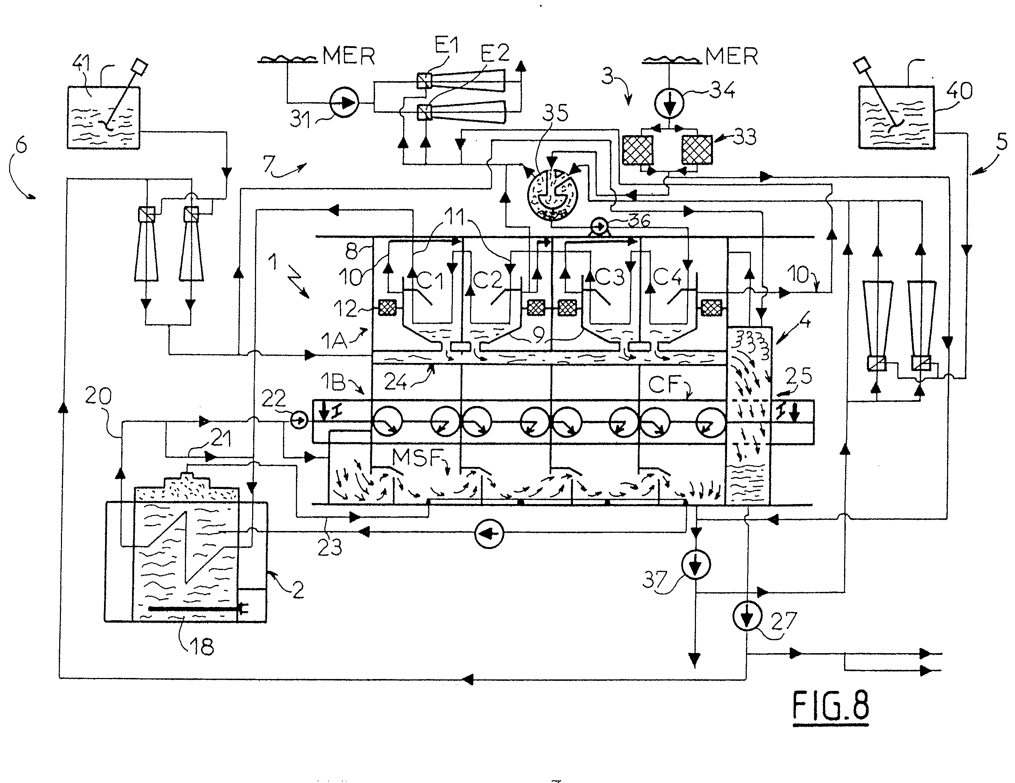

L'installation de dessalement d'eau de mer que représente la figure 8 à titre d'exemple non limitatif comporte principalement une station d'évaporation/condensation 1, une chaudière de réchauffage de saumure 2, un circuit d'alimentation en eau de mer 3, un circuit d'évacuation d'eau distillée 4, un circuit de traitement chimique de l'eau de mer 5, un circuit de traitement chimique de l'eau distillée 6, et un circuit d'extraction de gaz 7.

La station d'évaporation/condensation 1 qui constitue le coeur de l'installation comporte une enceinte étanche 8 en PRFV dans laquelle sont prévues plusieurs cellules côte-à-côte, ici au nombre de 4 et référencées C1,C2,C3 et C4. Cette station se compose d'un étage supérieur de condensation 1A et d'un étage inférieur d'évaporation 1B.

Chaque cellule est équipée d'un condenseur 9, d'un extracteur de gaz 10, d'un passage de saumure 11 et de séparateurs dits magiques 12 (ce sont des filtres qui ne laissent passer que de la vapeur d'eau et des gaz non condensables et ne laissent pas passer des gouttelettes de saumure chargées). Les cellules sont indépendantes les unes par rapport aux autres du point de vue de la pression absolue et de la température.

L'étage inférieur de la station 1 comporte un premier niveau d'évaporation de type MSF multiflash avec des chicanes et un second niveau situé immédiatement au-dessus appelé cylindro-flash (noté CF), ces niveaux étant adaptés à être alimentés simultanément en saumure.

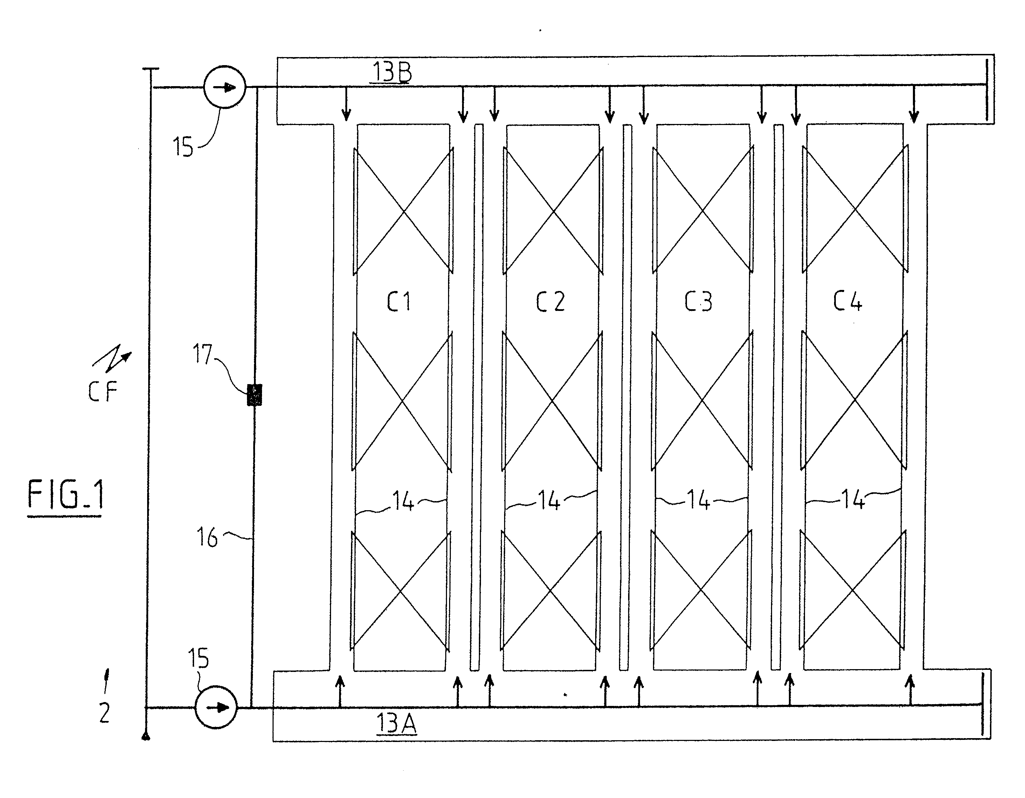

Ainsi qu'il ressort de la figure 1 ce cylindro-flash comporte deux collecteurs de distribution 13A et 13B (en PRFV) parallèles reliés par des cylindres parallèles horizontaux de flashage 14 à raison d'une paire de cylindres par cellule (soit un total de 8). Ces collecteurs sont alimentés en saumure à haute température, à partir de la chaudière 2, par deux pompes de refoulement 15. Une tubulure d'équilibrage 16, équipée d'un manomètre 17 est disposée entre les sorties de ces pompes.

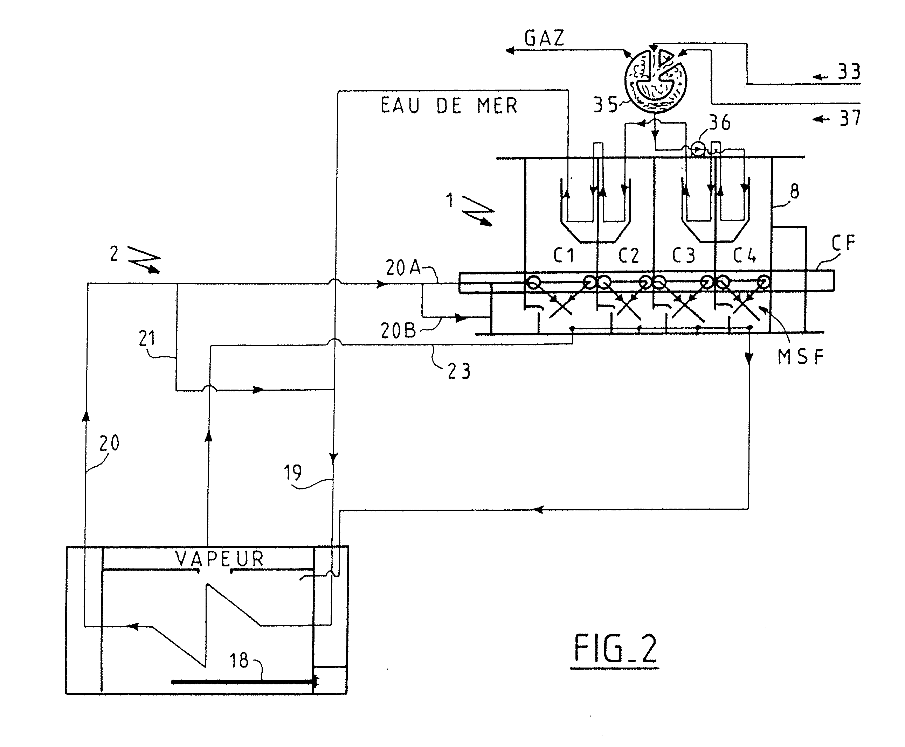

Les cylindres 14 d'évaporation par flashage sont percés de place en place de trous convergents-divergents, partiellement en regard au sein de chaque cellule, destinés à pulvériser la saumure chaude dans les cellules selon les flèches inclinées des figures 2 et 8. Au sein de chaque cellule les jets de saumure pulvérisée s'échappant en partie en regard des cylindres contenus dans cette cellule, représentés par des triangles à la figure 1, convergent et provoquent, en leurs zones de contact, une libération de vapeur vers les condenseurs. Sur la figure 1, entre les triangles se trouvent des zones d'échappement de vapeur vers ces condenseurs.

La chaudière de réchauffage 2 (voir figure 2) constitue un volume étanche dans une enceinte en PRFV. Un condendeur y est monté en son sein entre deux boîtes à eau (en PRFV) appelées boîte d'entrée du condenseur et boîte de sortie du condenseur. Deux résistances électriques 18 sont montées dans la chaudière pour l'échauffement de l'eau de mer.

Cette chaudière reçoit en 19 l'eau de mer (saumure) ayant circulé dans les cellules C1 à C4 et fournit en 20, de l'eau de mer chaude destinée à l'étage d'évaporation. Un circuit de retour 21 (by-pass) est relié entre les canalisations 19 et 20 et permet un recyclage d'eau de mer en vue d'un échauffement supplémentaire. Il en résulte une écomomie d'énergie d'échauffement et une meilleure utilisation de celle-ci.

La canalisation de sortie 20 se sépare en deux branches 20A et 20B aboutissant respectivement au cylindro-flahs CF et au niveau multiflash. La répartition de l'eau de mer entre ces 2 branches est contrôlé par une pompe 22 (non représentée à la figure 2).

Il est prévu en outre un circuit fermé 23 (en PRFV) contenant la vapeur dégagée par la chaudière. Il permet un échauffement indirect de l'eau de mer ou saumure introduite dans les cellules. Cette vapeur se condense au contact de l'eau de saumure en raison de la différence de température.

On appréciera que l'eau de mer froide, dans la partie condensation, et la saumure chaude, dans la partie évaporation, circulent à contre-courant dans les cellules C1 à C4 de la station 1.

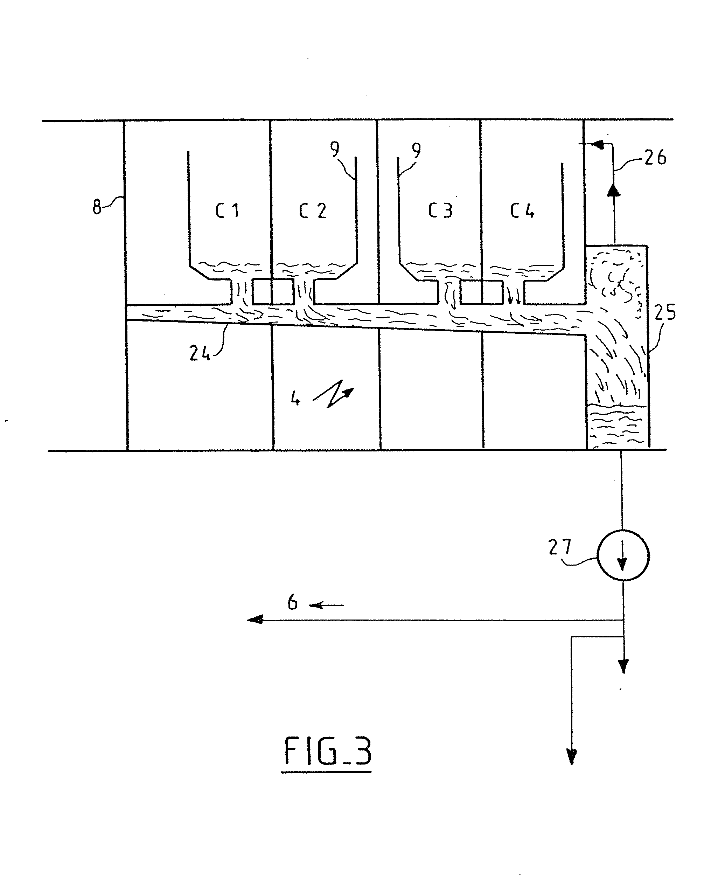

A un niveau intermédiaire de cette station se trouve un couloir d'eau distillée 24 (en PRFV) dans lequel débouchent les condenseurs 9 de chaque cellule par des trous d'écoulement (voir figure 3). C'est un système isolé vis-à-vis des autres éléments, ce qui élimine tout risque de mélange de l'eau de saumure avec l'eau distillée au moment de la détente-éclair (flash). Le circuit d'eau distillée 4 comporte en outre un réservoir d'accumulation 25 dans lequel débouche le couloir 24. Un circuit 26 de retour de vapeur vers le dernier condenseur permet une récupération par extraction interne dans la cellule. Ceci a pour effet une recondensation de la vapeur produite par l'écoulement par gravité de l'eau distillée du couloir 24 dans le réservoir 25. Une pompe 27 d'extraction d'eau distillée refoule l'eau distillée vers un réservoir de stockage (non représenté), vers le circuit 6 ou, par exemple vers une voie de rejet.

Le circuit 7 d'extraction de gaz, ou circuit de vide, comporte des canalisations en acier inoxydable ou en PRFV. Il est destiné à l'extraction des gaz non condensables formés dans les cellules au moment de l'évaporation et de la condensation ainsi que de l'air contenu dans l'eau d'appoint (eau de mer).

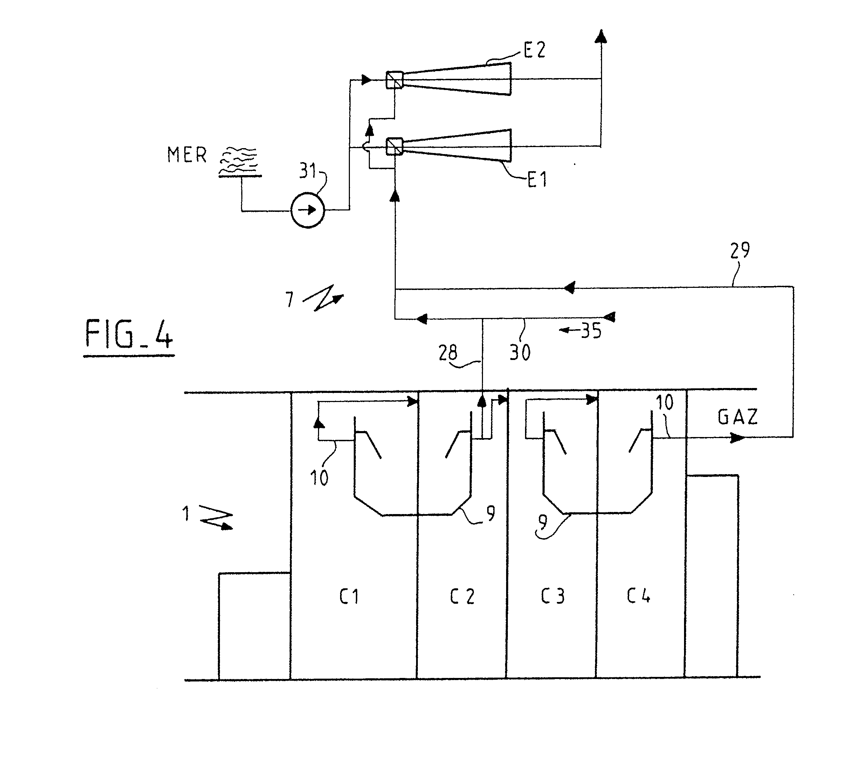

Tel que cela est représenté aux figures 4 et 8, cette extraction se fait en deux points : une première tubulure 28 extrait les qaz des cellules C1 et C2 tandis qu'une seconde tubulure 29 part de la cellule C4. Ce circuit comporte également une tubulure 30 de liaison à une rampe d'appoint 35 (voir ci-après). Ces diverses tubulures sont reliées à des éjecteurs E1 et E2 de maintien de vide assurant l'extraction. Ces éjecteurs travaillent grâce à un refoulement d'eau de mer, par l'intermédiaire d'une pompe 31 (ils peuvent, en variante, travailler en circuit fermé, les gaz étant éjectés dans un réservoir d'où est prélevé le fluide d'éjection).

Il est à souligner que, pour les centrales thermiques combinées à des unités de dessalement, le vide se fait à l'aide d'éjecteurs à vapeur (MP = 60 bars et MP = 30 bars). Le vide dans des unités avec chaudière (sans combinaison) se fait à l'aide d'éjecteurs à vapeur (MP = 30 bars). Dans le système de l'invention le vide se fait à l'aide d'une pompe à eau et d'éjecteurs (cas sans combinaison) ; mais si l'unité est combinée, le circuit change automatiquement à volonté.

Le circuit 3 d'alimentation en eau de mer, ou circuit d'appoint en eau, comporte principalement un réservoir principal 33 alimenté en eau de mer par une pompe 34 (voir figure 8) et un ensemble de tuyauteries reliées aux condenseurs des cellules C1 et C4. Il est relié à un réservoir intermédiaire 35 (rampe d'appoint). Un circuit d'alimentation de cette rampe est relié au réservoir principal afin de maintenir le niveau de production (débit d'alimentation) de l'eau à dessaler. La rampe d'appoint est en liaison directe avec l'entrée d'aspiration d'une pompe de recirculation 36 (voir figure 8) permettant le refoulement aux condenseurs d'un mélange d'eau d'appoint et de saumure traitée.

On notera que de la saumure récupérée au bas de l'étage d'évaporation de la station 1 est refoulée vers la rampe 35 (ou rejetée) par une autre pompe 37 de recirculation. A titre d'appoint, celle-ci est par ailleurs alimentée directement à partir du réservoir 33.

En variante non représentée, une tubulure d'appoint permet une addition d'eau de mer (ou eau brute) à l'eau de mer sortant des condenseurs en provenance du réservoir principal.

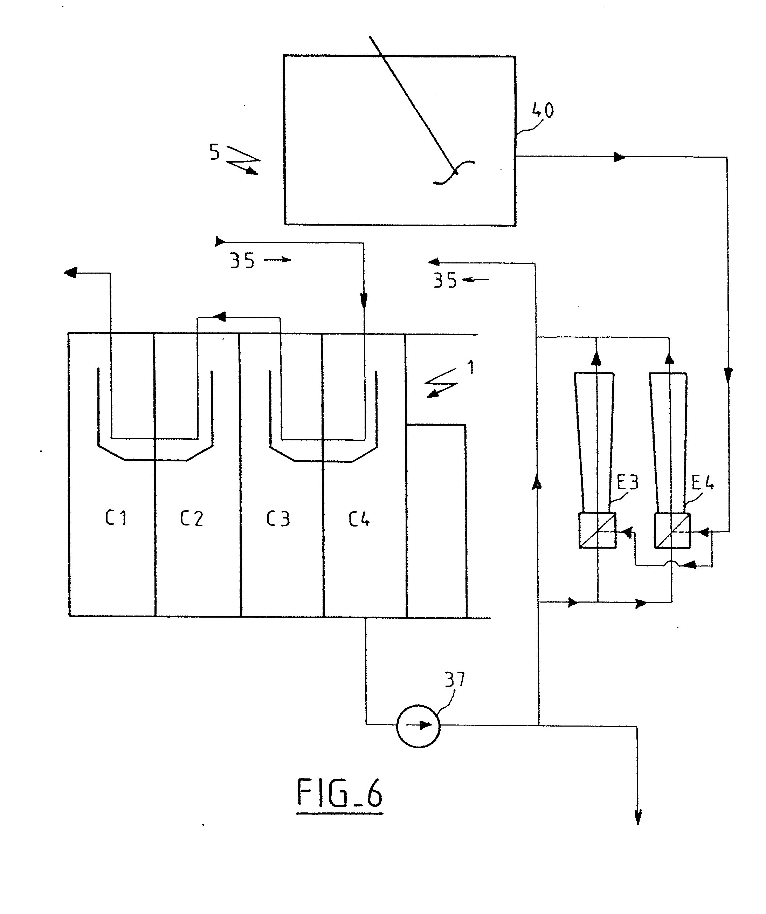

Au réservoir intermédiaire 35 aboutit par ailleurs le circuit 5 d'injection d'un agent de traitement chimique de l'eau de mer (voir la figure 6). Le circuit comporte un réservoir de réactif chimique 40 contenant un mélange de polyphosphates et d'antimousse. Ce mélange a pour fonction de fluidiser la boue et distorcher les germes cristallins de carbonate de calcium ($CaCO_3$) en empêchant leur croissance par action purement physique. Le carbonate de calcium qui se concentre au-delà de 60 degrés est neutralisé par le polyphosphate (à moins de 60 degrés le carbonate de calcium est rejeté par la pression de l'eau de mer dans les condenseurs). L'anti-mousse est ajouté pour empêcher l'eau de mer de déborder des séparateurs magiques pendant l'ébullition.

Ce mélange est injecté dans l'eau de mer, au sein du réservoir d'appoint 35, par des éjecteurs E3 et E4 dont le fluide moteur est constitué par de l'eau de saumure (à traiter) refoulée par la pompe 37 de recirculation ; il en sort un mélange saumure-polyphosphate-anti-mousse.

Dans le réservoir 35 se produit donc une dégazéification de l'eau de mer et son mélange avec du polyphosphate dans des proportions données.

le circuit 6 de traitement chimique de l'eau distillée comporte un réservoir 41 de soude caustique relié à une tuyauterie de dérivation reliée au couloir d'eau distillée 24 et à la sortie du réservoir 25 d'accumulation d'eau distillée. De la soude caustique est injectée dans cette tuyauterie par des éjecteurs E5 et E6 dont le fluide moteur est l'eau distillée refoulée dans cette tuyauterie par la pompe 27. Cette soude caustique permet de lutter contre la corrosion des conduites d'eau distillée (formation d'une couche protectrice) et une augmentation du potentiel d'hydrogène (pH) ; il y a également augmentation de la température de l'eau distillée afin de récupérer la vapeur à recycler pour la recondensation.

En variante, la soude peut être injectée par une pompe vers l'entrée du couloir d'eau distillée et vers le réservoir 25 d'accumulation d'eau distillée au travers de vannes.

On appréciera que, selon l'invention, l'injection des produits chimiques se fait de préférence au moyen d'éjecteurs (qui peuvent travailler en circuit fermé) dont le fluide moteur est l'eau à traiter, alors que, de façon classique, on utilise des pompes doseuses dans lesquelles se produit une cavitation et une diminution de l'effet thermique de l'unité de distillation à moins de 40%.

La mise en route de l'installation de la figure 8 commence par un remplissage de tous les circuits par de l'eau de mer (de 35 à 55 g de sel/litre). On procède ensuite au démarrage du circuit du vide 7 : il y a extraction d'air par les électeurs E1 et E2 dont la fluide moteur est de l'eau de mer refoulée par la pompe 31. Cette extraction de gaz se produit dans le réservoir d'appoint 35, dans les cellules 1 et 2, et dans les cellules 1 à 4. Une fois le vide obtenu et la circulation de l'eau de mer entamée, on commence l'injection du polyphosphate et de l'antimousse et on procède à l'allumage de la chaudière 2 jusqu'à obtention d'une température de 45° dans les cellules 1 et 2, permettant ainsi la production des premières gouttelettes d'eau distillée et de quelques grammes de gaz non condensables. Ces derniers sont rejetés à l'atmosphère par les éjecteurs E1 et E2 de maintien de vide et les circuits de l'évaporateur.

Lorsque la température atteinte est de 90° à la sortie du réchauffeur, l'unité est considérée en pleine production.

Cette première quantité d'eau distillée produite sera rejetée dans la mer.

Dès que l'unité est stabilisée, une quantité d'eau produite servira comme fluide moteur pour les éjecteurs E5 et E6 d'extraction de la soude caustique dans le couloir 24 de production de l'eau distillée.

En régime normal de production :
- de l'eau de mer est aspirée dans les réservoirs 33 par la pompe 34,
- cette eau de mer passe dans la rampe d'appoint 35 où elle se dégazéifie et se mélange avec du polyphosphate,
- cette eau est ensuite aspirée par la pompe 36 et refoulée aux condenseurs des cellules C4, C3, C2 puis C1,
- cette eau entre dans la chaudière pour atteindre la température voulue d'échauffement,
- cette eau chaude est admise à l'étage d'évaporation 1B de la station 1, d'une part à l'entrée du niveau MSF et, d'autre part dans les collecteurs du niveau CF ; elle s'y vaporise du fait des caractéristiques géométriques des éléments constitutifs des deux niveaux précités, combinées au vide entretenu par le circuit d'extraction 7 et aux conditions de température,
- la vapeur et les gaz non condensables s'élèvent et traversent les séparateurs magiques ; les gaz non condensables sont aspirés par le circuit 7 et la vapeur d'eau se condense, par refroidissement auprès des canalisations de saumure froide, en une eau distillée de haute pureté grâce aux séparateurs,
- l'eau distillée récupérée au fond des condenseurs est traitée par la soude caustique qui en augmente le pH et en élève la température (de 1 à 2° environ),
- l'eau distillée est ensuite refoulée en vue d'un stockage ou en vue d'un traitement pour la rendre potable.

Si la conductibilité est mauvaise, la quantité d'eau produit ne sera pas rejetée mais recyclée et renvoyée dans le réservoir d'appoint, en ajustant en conséquence la quantité d'appoint principal.

Il est rappelé que la vapeur et les gaz condensables apparaissent par effet de "nappe flashante" (nappe d'eau chaude refoulée dans un vide poussé par une "pompe centrifuge" actionnée par l'effet du vide dû aux différentes caractéristiques (figures) géométriques existant dans la partie d'évaporation. Il y a ensuite libre circulation des gaz vers les condenseurs.

Dans une telle installation la surface d'échange génératrice de vapeur est augmentée, de même que la quantité totale de vapeur fournie et donc la quantité totale d'eau distillée obtenue. Au moment du passage de l'eau de cellule en cellule, se produit le phénomène du multiflashing. La température à la sortie du réchauffeur est maintenue à 90° avec extraction des gaz non condensables de l'unité complète par les cellules C1, C2, C3 et C4. Un tel système est capable de ramener à 2,06 le rapport Δ entre la production d'eau distillée et la quantité d'eau de mer à dessaler. Cela constitue une croissance de l'ordre de 3/4 par rapport à la production réalisée par des unités classiques de dessalement de type MSF.

**Revendications**

1. Procédé de distillation d'eau de mer selon lequel on prélève (3) de l'eau de mer, on chauffe (2) cette eau de mer et on l'évapore (1B) dans une enceinte étanche (8) dans laquelle on effectue (7) une extraction continue de gaz, l'eau de mer circulant dans cette enceinte en vue de son évaporation par détente sous forme de nappes (MSF), d'une part, et sous forme de jets dirigés multiples (CF), d'autre part, on condense (1A) la vapeur d'eau résultante et on recueille (4) l'eau distillé ainsi produite.

2. Procédé selon la revendication 1, caractérisé en ce que l'on injecte (E3 à E6) au moins un agent de traitement chimique dans l'eau, eau de mer ou eau distillée, en prélevant de l'énergie dans cette eau.

3. Installation de distillation d'eau de mer comportant :
- une enceinte étanche (8) comprenant un étage de condensation (1A) avec des condenseurs (9) et des passages d'eau de mer (11), et un étage d'évaporation (1B),
- un circuit d'alimentation (3) en eau de mer relié à l'entrée des passages d'eau de mer,
- un circuit de réchauffage avec une chaudière (2) pour échauffer l'eau de mer sortant des passages d'eau de mer avant sa circulation dans l'étage d'évaporation,
- des voies parallèles (CF,MSF) de circulation de l'eau de mer dans l'étage d'évaporation (1B) sous forme de jets dirigés multiples, d'une part, et de nappes, d'autre part,
- un circuit (7) d'extraction de gaz branché sur l'enceinte étanche pour permettre une évaporation par détente de l'eau de mer des jets et des nappes, et
- un circuit de prélèvement de l'eau distillée (4).

4. Installation selon la revendication 3, caractérisée en ce qu'elle comporte en outre un circuit (5) de traitement chimique de l'eau de mer comportant un réservoir (4) de polyphosphate et d'antimousse et un éjecteur (E3,E4) branché sur une canalisation de dérivation de cette eau de mer.

5. Installation selon la revendication 3 ou la revendication 3, caractérisée en ce qu'elle comporte en outre un circuit (6) de traitement chimique de l'eau distillée comportant un réservoir (41) de soude caustique et un éjecteur (E5, E6) branché sur une canalisation de dérivation de cette eau distillée.

6. Installation selon l'une quelconque des revendications 3 à 5, caractérisée en ce que l'enceinte (8) est formée d'une succession de cellules indépendantes (C1 à C4) dans lesquelles l'eau de mer circule, dans les étages de condensation et d'évaporation, à contre-courant.

7. Installation selon l'une quelconque des revendications 3 à 6, caractérisée en ce que la voie (CF) de circulation de l'eau de mer sous forme de jets dirigés multiples comporte deux collecteurs (13a, 13B) reliés par des cylindres transversaux (14) à raison d'une paire de cylindres dans chacune des cellules indépendantes que comporte l'enceinte étanche, les cylindres de chaque paire comportant des trous d'éjection.

8. Installation selon l'une quelconque des revendications 3 à 7, caractérisée en ce que le circuit de réchauffrage comporte un circuit de retour (21) permettant un recyclage d'eau de mer chaude dans la chaudière (2).

9. Installation selon l'une quelconque des revendications 3 à 8, caractérisée en ce que le circuit de rechauffrage comporte un circuit de vapeur (23) faisant circuler la vapeur de la chaudière dans l'étage d'évaporation et la ramenant sous forme condensée.

10. Installation selon l'une quelconque des revendications 3 à 9, caractérisée en ce que le circuit d'eau distillée comporte un couloir (24) dans lequel débouchent les condenseurs (9) et qui débouche dans un réservoir d'accumulation (25).

FIG.1

0240427

33
37

GAZ

EAU DE MER

8
36
35

C1 C2 C3 C4

CF

MSF

1

20A
20B

23

19

21

20

2

VAPEUR

18

FIG_2

FIG.3

E2

MER

31

E1

29

7

FIG_4

28    30    35

GAZ

10    10

9    9

1

C1    C2    C3    C4

0240427

FIG_5

5

40

35 →

35 ←

1

C1  C2  C3  C4

E3    E4

37

FIG_6

FIG_7

0240427

FIG.8